# EUROPEAN PATENT APPLICATION

(11) **EP 4 156 693 A1**
(43) Date of publication of application: **29.03.2023**
(21) Application number: 22165507.9
(22) Date of filing: 30.03.2022
(51) Int. Cl.: H04N 21/2187, H04N 21/4788, H04N 21/485, H04N 21/431

(54) **METHOD AND APPARATUS FOR DISPLAYING LIVE BROADCAST INTERFACE**

(30) Priority: 28.09.2021 CN 202111142492
(71) Applicant: Beijing Dajia Internet Information Technology Co., Ltd., Beijing 100085 (CN)
(72) Inventor: Chen, Yunkun, Beijing, 100085 (CN)
(74) Representative: Angerhausen, Christoph

(57) **Abstract**

A method and an apparatus for displaying a live broadcast interface. The method includes: obtaining a main live broadcast room and a plurality of secondary live broadcast rooms associated with the main live broadcast room and belonging to a plurality of live broadcast groups respectively; displaying a target page including a first area, the first area displaying a main live broadcast interface corresponding to the main live broadcast room; in response to a target secondary live broadcast room being in an interactive state with a target object, displaying secondary live broadcast interfaces corresponding to respective secondary live broadcast rooms of a target live broadcast group in a second area of the target page. The target live broadcast group is a live broadcast group to which the target secondary live broadcast room belongs, and the target secondary live broadcast room is a secondary live broadcast room that the target object joins.

## Description

### TECHNICAL FIELD

The disclosure relates to the field of computer technology, in particular to a method and an apparatus for displaying a live broadcast interface, an electronic device, and a storage medium.

### BACKGROUND

With the development of Internet technology and terminal technology, a large number of network applications integrating network socialization and content sharing, such as online live broadcast rooms, are emerging. Specifically, in some online live broadcast rooms, users can not only share content in real time through live broadcast, but also interact with each other by sending messages to each other through the live broadcast room or a message module outside the live broadcast room. If the user does not like the live broadcast of a certain live broadcast room, he can also switch the live broadcast room to watch the live broadcast of other live broadcast rooms.

### SUMMARY

According to a first aspect of the disclosure, a method for displaying a live broadcast interface, is provided. The method includes:
obtaining a main live broadcast room and a plurality of secondary live broadcast rooms associated with the main live broadcast room, wherein the plurality of secondary live broadcast rooms belong to a plurality of live broadcast groups respectively;
displaying a target page, wherein the target page includes a first area, and the first area displays a main live broadcast interface corresponding to the main live broadcast room;
in response to a target secondary live broadcast room being in an interactive state with a target object, displaying secondary live broadcast interfaces corresponding to respective secondary live broadcast rooms of a target live broadcast group in a second area of the target page, wherein the target live broadcast group is a live broadcast group to which the target secondary live broadcast room belongs, and the target secondary live broadcast room is a secondary live broadcast room that the target object joins.

According to a second aspect of the present disclosure, an apparatus for displaying a live broadcast interface is provided. The apparatus includes:
an obtaining module, configured to obtain a main live broadcast room and a plurality of secondary live broadcast rooms associated with the main live broadcast room, wherein the plurality of secondary live broadcast rooms belong to a plurality of live broadcast groups respectively;
a display module, configured to display a target page, wherein the target page comprises a first area, and the first area displays a main live broadcast interface corresponding to the main live broadcast room;
a first response module, configured to, in response to a target secondary live broadcast room being in an interactive state with a target object, display secondary live broadcast interfaces corresponding to respective secondary live broadcast rooms of a target live broadcast group in a second area of the target page, wherein the target live broadcast group is a live broadcast group to which the target secondary live broadcast room belongs, and the target secondary live broadcast room is a secondary live broadcast room that the target object joins.

With the present disclosure, the network device can clarify the reason why the terminal skips transmission, by clearly specifying the condition for the network device to release the preconfigured resource, such as the maximum number of times the terminal is allowed to skip transmission continuously, or the condition for the terminal to initiate random access in response to link failure, or the condition for the terminal in the grant-free scheduling state to send the setting information, thereby accurately realizing the control of reserving or releasing the preconfigured resource.

It should be understood that the above general description and the following detailed description are only exemplary and explanatory, and cannot limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram of an application environment in which a live broadcast interface is displayed according to an embodiment.
FIG. 2 is a flowchart 1 of a method for displaying a live broadcast interface according to an embodiment.
FIG. 3 is a schematic diagram 1 of a target page according to an embodiment.
FIG. 4 is a schematic diagram 2 of a target page according to an embodiment.
FIG. 5 is a schematic diagram 3 of a target page according to an embodiment.
FIG. 6 is a schematic diagram 4 of a target page according to an embodiment.
FIG. 7 is a schematic diagram 5 of a target page according to an embodiment.
FIG. 8 is a schematic diagram 6 of a target page according to an embodiment.
FIG. 9 is a schematic diagram 7 of a target page according to an embodiment.
FIG. 10 is a flowchart 2 of a method for displaying a live broadcast interface according to an embodiment.
FIG. 11 is a flowchart 3 of a method for displaying a live broadcast interface according to an embodiment.
FIG. 12 is a flowchart showing a live interface display in the case of ending the interaction with the target object according to an embodiment.
FIG. 13 is a schematic diagram 8 of a target page according to an embodiment.
FIG. 14 is another flowchart showing a live interface display in the case of ending the interaction with the target object according to an embodiment.
FIG. 15 is a schematic diagram 9 of a target page according to an embodiment.
FIG. 16 is a block diagram of an apparatus for displaying a live broadcast interface according to an embodiment.
FIG. 17 is a block diagram of an electronic device for displaying a live broadcast interface according to an embodiment.

### DETAILED DESCRIPTION

In order to make those skilled in the art better understand the technical solutions of the present disclosure, the technical solutions in embodiments of the present disclosure will be clearly and completely described below with reference to the accompanying drawings.

It should be noted that the terms "first", "second" and the like in the description and claims of the present disclosure and the above drawings are used to distinguish similar objects, and are not necessarily used to describe a specific order or sequence. It is to be understood that the data so used are interchangeable under appropriate circumstances so that the embodiments of the disclosure described herein can be practiced in sequences other than those illustrated or described herein. The implementations described in the embodiments below are not intended to represent all implementations consistent with this disclosure. Rather, they are merely examples of apparatus and methods consistent with some aspects of the present disclosure, as recited in the appended claims.

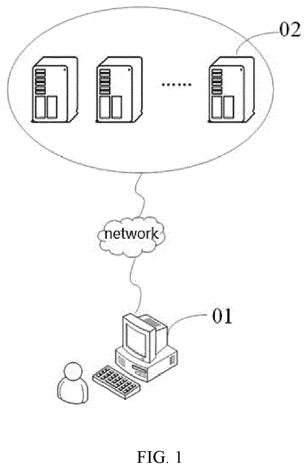

Please refer to FIG. 1. FIG. 1 shows an application environment of displaying a live broadcast interface according to an embodiment, and the application environment may include a client 01 and a server 02.

The client 01 may be configured to obtain a main live broadcast room and a plurality of secondary live broadcast rooms associated with the main live broadcast room, the plurality of secondary live broadcast rooms belonging to a plurality of live broadcast groups respectively; and configured to display a target page, the target page including a first area, and the first area displaying a main live broadcast interface corresponding to the main live broadcast room; and configured to, in response to a target secondary live broadcast room being in an interactive state with a target object, display secondary live broadcast interfaces corresponding to respective secondary live broadcast rooms of the target live broadcast group in a second area of the target page. Optionally, the client 01 may include terminals such as a smart phone, a desktop computer, a tablet computer, a laptop computer, a digital assistant, an augmented reality (AR)/virtual reality (virtual reality, VR) device, and a smart wearable device, and may also include a server running independently, or a distributed server, or a server cluster composed of a plurality of servers.

The server 02 may be configured to provide background services for the client 01. Optionally, the server 02 may be an independent physical server, a server cluster or a distributed system composed of multiple physical servers, or a cloud server providing basic cloud computing services such as cloud service, cloud database, cloud computing, cloud function, cloud storage, network service, cloud communication, middleware services, domain name services, security services, Content Delivery Network (CDN), and big data and artificial intelligence platforms.

In addition, it should be noted that what is shown in FIG. 1 is only an application environment of displaying the live broadcast interface provided by the present disclosure, and other application environments may also be included in practical applications.

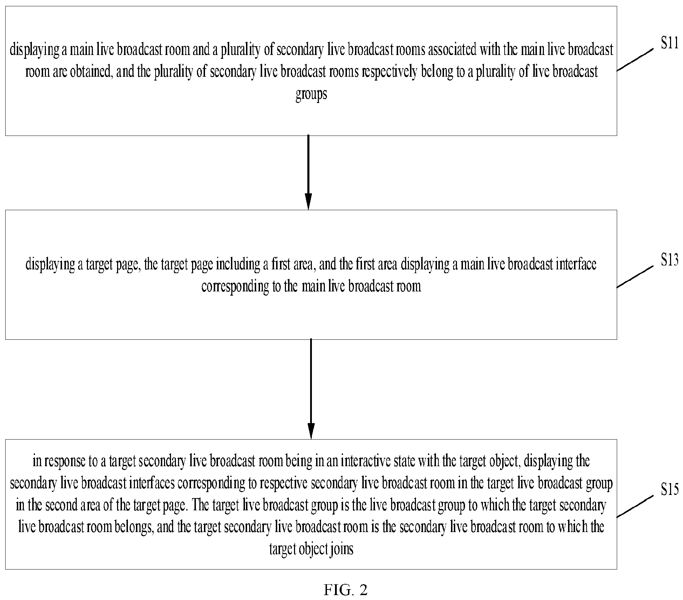

FIG. 2 is a flow chart 1 of a method for displaying a live interface according to an embodiment. As shown in FIG. 2, the method for displaying a live interface can be applied to the system including a client and a server shown in FIG. 1, and may include following steps S11-S15.

In step S11, a main live broadcast room and a plurality of secondary live broadcast rooms associated with the main live broadcast room are obtained, and the plurality of secondary live broadcast rooms respectively belong to a plurality of live broadcast groups.

For example, the main live broadcast room is mainly used for the presentation of the main stage or the main perspective, which may be an official signal of a satellite TV (such as a TV station).

For example, the secondary live broadcast room is used for the presentation of a second stage or a secondary perspective, which may be an anchor performance, live sales, etc. presented next to the main live broadcast room.

For example, the association relationship between the main live broadcast room and the secondary live broadcast rooms may be as follows: the main live broadcast room is equivalent to the main stage or the main perspective, and can provide the user with an entrance to the secondary live broadcast rooms, so that the user can switch between the main live broadcast room and the plurality of secondary live broadcast rooms.

Specifically, the plurality of secondary live broadcast rooms form a chain-link live broadcast room, which is a live broadcast room presentation mode that associates a plurality of specific live broadcast rooms and provides a convenient entry for users to switch between several associated live broadcast groups.

Specifically, the plurality of secondary live broadcast rooms may be pre-divided into a plurality of live broadcast groups according to preset conditions, and each live broadcast group includes a preset number of secondary live broadcast rooms. For example, if there are 15 secondary live broadcast rooms (15 anchors, each secondary live broadcast room corresponds to one anchor), they can be divided into 3 live broadcast groups, and each group has 5 secondary live broadcast rooms.

The preset number of secondary live broadcast rooms in the same live broadcast group also have a specific association relationship. For example, the items displayed in the multiple preset number of secondary live broadcast rooms belong to the same category or the same mental style (trend clothes, trendy toys, etc.).

Optionally, the above-mentioned preset conditions may include, but are not limited to: random division, division according to the anchors in the secondary live broadcast rooms.

In step S13, a target page is displayed, and the target page includes a first area, and the first area displays a main live broadcast interface corresponding to the main live broadcast room.

Optionally, the target page not only includes the first area, but also includes preset area control information in the first state, and the preset area control information in the first state is configured to control display of a second area.

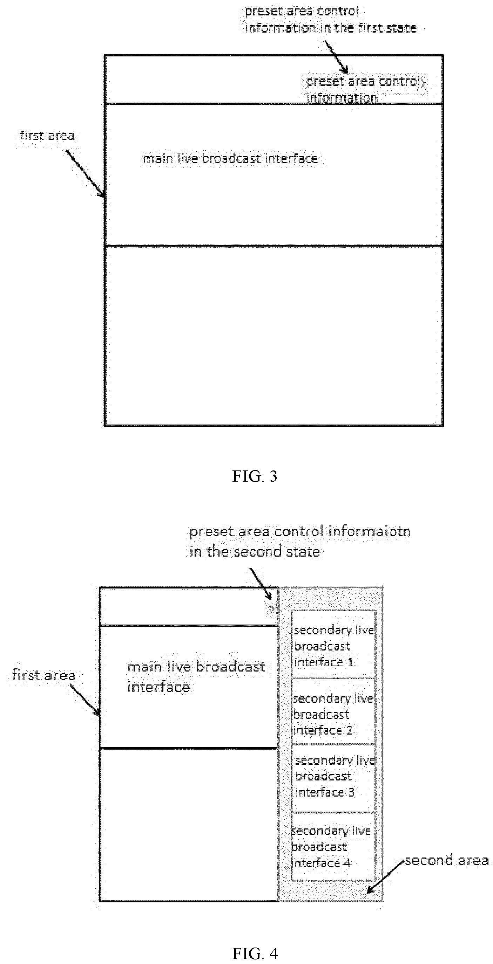

FIG. 3 is a schematic diagram 1 of a target page according to an embodiment. When the user wants to watch the main live broadcast interface of the main live broadcast room, the corresponding watch icon or button can be triggered to generate a watch instruction of the main live broadcast interface. In response to this watch instruction, the client displays the target page including the preset area control information in the first state and the first area, and the main live broadcast interface is displayed in the first area.

Further, as shown in FIG. 3, the preset area control information may be displayed in the area of the target page other than the first area.

In an optional embodiment, the method may further include: in response to a first display instruction triggered based on the preset area control information in the first state, displaying in the second area secondary live broadcast interfaces respectively corresponding to the plurality of secondary live broadcast rooms.

Specifically, in a case that the target object does not join any secondary live broadcast room, the preset area control information in the first state can be clicked, thereby triggering the first display instruction. In response to the first display instruction, the client display the secondary live broadcast interfaces respectively corresponding to the plurality of secondary live broadcast rooms in the second area of the target page.

The target object refers to the object with certain influence or high popularity, for example, celebrities, Internet celebrities, business elites, education experts, intelligent robots, etc.

FIG. 4 is a schematic diagram 2 of a target page according to an embodiment. FIG. 4 may be obtained by the user clicking the preset area control information in the first state in FIG. 3. As shown in FIG. 4, the second area and the first area may have overlapping portions, that is, the second area blocks a part of the first area. Optionally, there may be no overlapping portion between the second area and the first area. In a case that there is no overlapping portion between the two, the size of the first area will scale down accordingly when the second area is displayed.

In an optional embodiment, in the case that the target object does not join any secondary live broadcast room, the method may further include: in response to the first display instruction, adjusting the state of the preset area control information from the first state to a second state. The preset area control information in the second state is configured to control hiding of the second area.

In embodiments of the present disclosure, after the secondary live broadcast interfaces corresponding to the plurality of secondary live broadcast rooms are displayed in the second area of the target page, the state of the preset area control information is adjusted from the first state to the second state configured to control the hiding of the second area. Since the second area is already displayed on the target page in response to the first display instruction, there is no need to continue to display it. At this time, the state of the preset area control information is adjusted from the first state to the second state configured to control the hiding of the second area. In the second state, when the second area needs to be hidden later, the second area can be hidden conveniently and quickly, reducing the interactive operation caused by hiding the second area, and reducing the consumption of system resources by the hiding process of the second area, thereby increasing the speed of switching between different live broadcast interfaces.

In a feasible embodiment, in response to the first display instruction triggered based on the preset area control information in the first state, displaying the secondary live broadcast interfaces corresponding to the plurality of secondary live broadcast rooms in the second area may include: in response to the first display instruction, on the target page, displaying the secondary live broadcast interfaces corresponding to the plurality of secondary live broadcast rooms in the second area in a form of list.

Further, as shown in FIG. 4, the plurality of secondary live broadcast interfaces may be displayed in the second area in the form of list. The list may be slid up and down in the second area, so as to facilitate the user to select the secondary live broadcast interface to be switched, which is beneficial to more intuitively display the plurality of secondary live broadcast interfaces to the user.

In another optional embodiment, in a case that the target object does not join any secondary live broadcast room, the method may further include: in response to a hiding instruction triggered based on the preset area control information in the second state, hiding the second area, and adjusting the state of the preset area control information from the second state to the first state.

In embodiments of the present disclosure, under the target page shown in FIG. 4, when the user does not need to further switch the secondary live broadcast interface, he can directly click the preset area control information in the second state in FIG. 4, thereby hiding the second area, and returning to the target page shown in FIG. 3. At this time, the state of the preset area control information is adjusted from the second state to the first state, thereby improving the flexibility and user-friendliness of the live interface display.

In a feasible embodiment, in the case that the target object does not join any secondary live broadcast room, the method may further include: in response to a selection instruction triggered based on any secondary live broadcast interface of the secondary live broadcast interfaces corresponding to the plurality of secondary live broadcast rooms, switching the secondary live broadcast interface corresponding to the selection instruction from the second area to the first area, and switching the main live broadcast interface from the first area to the second area.

Specifically, in the case that the target object does not join any secondary live broadcast room, the user can click on any secondary live broadcast interface of the secondary live broadcast interfaces corresponding to the plurality of secondary live broadcast rooms displayed in the second area, thereby triggering the selection instruction, and switching the secondary live broadcast interface corresponding to the selection instruction with the main live broadcast interface, that is, switching the secondary live broadcast interface corresponding to the selection instruction from the second area to the first area, and switching the main live broadcast interface from the first area to the second area.

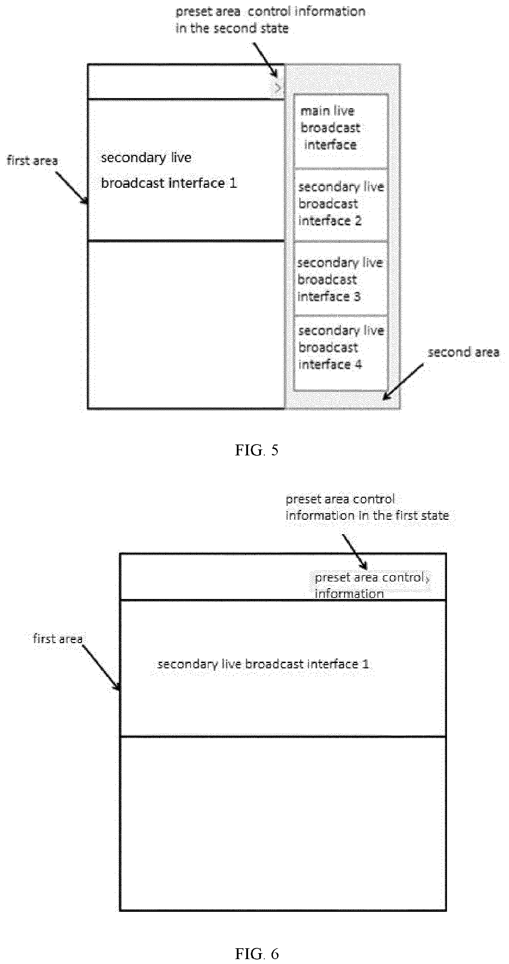

FIG. 5 is a schematic diagram 3 of a target page according to an embodiment. FIG. 5 may be obtained by the user clicking on any secondary live broadcast interface displayed in the second area in FIG. 4. As shown in FIG. 4 , since the size of the first area is different from the size of the second area, and the size of the first area is greater than the size of the second area, the above-mentioned switching may refer to switching between large and small screens, that is, after switching the secondary live broadcast interface (for example, the secondary live broadcast interface 1 in FIG. 5) corresponding to the selection instruction from the second area to the first area, the interface size will be appropriately enlarged to fit the size of the first area, and after the main live broadcast interface is switched from the first area to the second area, the size of the interface will be appropriately reduced to fit the size of the second area.

It should be noted that the degree of enlargement and reduction of the interface size in the process of switching between large and small screens can be adjusted according to actual application scenarios, which is not limited in the present disclosure.

In embodiments of the present disclosure, by displaying the secondary live broadcast interfaces corresponding to each of the plurality of secondary live broadcast rooms in the second area, when switching pages, there is no need to exit the main live broadcast interface currently displayed in the first area, and in response to the selection instruction triggered based on any secondary live broadcast interface, switching between the main live broadcast interface and the secondary live broadcast interface may be performed directly, which reduces the interactive operation during the display of the live broadcast interface, improves the display speed of the live broadcast interface, and thus improves the efficiency of information integration and transmission between the main live broadcast interface and the secondary live broadcast interfaces.

Further, as shown in FIG. 5, switching the main live broadcast interface from the first area to the second area may include: switching the main live broadcast interface from the first area to the top of the list in the second area.

Since the secondary live broadcast interfaces corresponding to the plurality of live broadcast rooms are displayed in the second area in the form of list in FIG. 5, in order to display the plurality of secondary live broadcast interfaces more intuitively, reduce the interaction with users, and thus improve the display of the live broadcast interface, when switching, the main live broadcast interface can be directly switched from the first area to the top of the list in the second area.

In an optional embodiment, in the case where the target object does not join any secondary live broadcast room, after switching the main live broadcast interface from the first area to the second area, the method may further include:
in response to the selection instruction triggered based on the preset area control information in the second state, hiding the second area.

FIG. 6 is a schematic diagram 4 of a target page according to an embodiment. FIG. 6 may be obtained by the user clicking the preset area control information in the second state in FIG. 5. As shown in FIG. 6, when the user clicks the preset area control information in the second state in FIG. 5, the selection instruction is triggered to hide the second area, and at this time, the secondary live broadcast interface 1 is displayed in the first area.

It should be noted that, after the second region is hidden, the state of the preset area control information in FIG. 6 is adjusted from the second state to the first state.

In embodiments of the present disclosure, with the selection instruction triggered by clicking the preset area control information in the second state, the second area is hidden, so that the secondary live broadcast interface 1 can be presented to the user through a larger viewing angle.

In an optional embodiment, in the case where the target object does not join any secondary live broadcast room, after switching the main live broadcast interface from the first area to the second area, the method further includes:
in response to a selection instruction triggered based on the main live broadcast interface, switching the main live broadcast interface from the second area to the first area, and hiding the second area.

Further, as shown in FIG. 5, when the user clicks the main live broadcast interface located in the second area in FIG. 5, the selection instruction is triggered, and in response to the selection instruction, the client switches the display of the main live broadcast interface to the first area and hides the second area, that is, returns to the target page shown in FIG. 3.

In embodiments of the present disclosure, by clicking on the main live broadcast interface located in the second area, it is possible to directly switch back to the target page shown in FIG. 3. During the process of displaying live broadcast interfaces, there is no need to exit the currently displayed interface, which improves the convenience of displaying the live broadcast interfaces. This reduces the interactive operations during the display of the live broadcast interfaces, thereby reducing the consumption of system resources during the display of the live broadcast interfaces.

In step S15, in response to a target secondary live broadcast room being in an interactive state with the target object, the secondary live broadcast interfaces corresponding to respective secondary live broadcast room in the target live broadcast group are displayed in the second area of the target page. The target live broadcast group is the live broadcast group to which the target secondary live broadcast room belongs, and the target secondary live broadcast room is the secondary live broadcast room to which the target object joins.

Specifically, the target secondary live broadcast room being in the interactive state with the target object refers to the state in which the target object enters the target secondary live broadcast room.

The live broadcast group to which the target secondary live broadcast room to which the target object joins belongs is the target live broadcast group. For example, there are 15 secondary live broadcast rooms, which are pre-divided into 3 live broadcast groups (live broadcast group A, live broadcast group B, and live broadcast group C). The target secondary live broadcast room to which the target object joins belongs to the live broadcast group A, the live broadcast group A is the target live broadcast group.

For example, the target secondary live broadcast room in the interactive state with the target object may be triggered by the user in the target secondary live broadcast room when the target object enters the target secondary live broadcast room, for example, by the anchor of the target secondary live broadcast room. The anchor of the target secondary live broadcast room can send the target secondary live broadcast room in the interactive state with the target object to the server, the server forwards the target secondary live broadcast room in the interactive state with the target object to the client of the user who is watching the main live broadcast interface, and the client performs subsequent operations in response to that the target secondary live broadcast room is in the interactive state with the target object.

For example, the target secondary live broadcast room in the interactive state with the target object can also be preset. For example, if it is known that the target object will join the target secondary live broadcast room within a certain time period, the target secondary live broadcast room can be set to be in the interactive state with the target object at a preset time after the target object joins the target secondary live broadcast room, and an interaction start instruction is automatically sent to the client of the user who is watching the main live broadcast interface, which lasts for a period of time, so as to attract the user who is watching the main live broadcast interface to the target secondary live broadcast room which the target object joins. For example, if the activity time of the target object is 10 minutes (that is, a certain time period), it is possible to set the target object to send the interactive state with the target object to the client at the 3rd minute (that is, the preset time) after the target object joins the target secondary live broadcast room, and last for 10 seconds.

In an optional embodiment, the method may further include:
in response to the target secondary live broadcast room being in the interactive state with the target object, displaying interaction start prompt information in a preset area where the target secondary live broadcast interface corresponding to the target secondary live broadcast room is located, and adjusting the state of the preset area control information from the first state to the second state. The interaction start prompt information is configured to prompt that the target object has joined the target secondary live broadcast room, and the preset area control information in the second state is configured to control the hiding of the second area.

For example, the interaction start prompt information may be displayed in the preset area in the form of prompt bubbles, and may also be displayed in other forms, which are not limited in the present disclosure.

For example, the interaction start prompt information may be "the target object has entered this live broadcast room to interact" and the like.

Optionally, the preset area may be an edge area of the target secondary live broadcast interface.

In embodiments of the present disclosure, when the target object enters the target secondary live broadcast room, the target secondary live broadcast room is in the interactive state with the target object, and in response to the interactive state, the client can display the interaction start prompt information in the preset area where the target secondary live broadcast interface corresponding to the target secondary live broadcast room to which the target object joins is located, which can intuitively show the user the target secondary live broadcast room where the target object is currently located, so that the user can enter the target secondary live broadcast room according to the interaction start prompt information, reducing the interactive operations during the display of the live broadcast interfaces, improving the speed of displaying the live broadcast interfaces, and reducing the consumption of system resources for displaying the live broadcast interfaces.

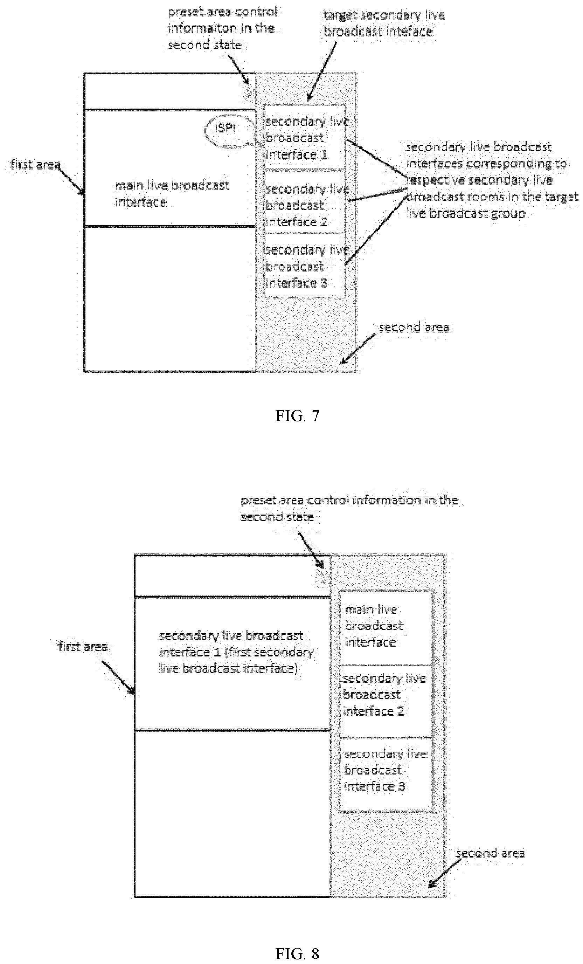

FIG. 7 is a schematic diagram 5 of a target page according to an embodiment. As shown in FIG. 7, when the target secondary live broadcast room is in the interactive state with the target object, the secondary live broadcast interfaces corresponding to respective secondary live broadcast rooms in the target live broadcast group to which the target object joins can be displayed on the target page, and the interaction start prompt information (ISPI) can displayed in the preset area where the target secondary live broadcast interface corresponding to the target secondary live broadcast room is located.

In an optional embodiment, the schematic diagram of the target page shown in FIG. 7 may be obtained by automatically switching the target page shown in FIG. 4. Correspondingly, in the above step S15, in response to the target secondary live broadcast room being in the interactive state with the target object, displaying the secondary live broadcast interfaces corresponding to respective secondary live broadcast rooms of the target live broadcast group to which the target object joins in the second area of the target page may include:
in response to the target secondary live broadcast room being in the interactive state with the target object, switching the secondary live broadcast interface corresponding to the plurality of secondary live broadcast rooms displayed in the second area, to the secondary live broadcast interfaces corresponding to respective secondary live broadcast rooms in the target live broadcast group.

Specifically, in the case that the target page currently viewed by the user is the target page shown in FIG. 4 (that is, the main live broadcast interface is displayed in the first area, and the secondary live broadcast interfaces corresponding to each of the plurality of sub live broadcast rooms are displayed in the second area, and the preset area control information is in the second state), in response to the target secondary live broadcast room being in the interactive state with the target object, the secondary live broadcast interfaces corresponding to the plurality of secondary live broadcast rooms displayed in the second area can be automatically switched to the secondary live broadcast interfaces corresponding to respective secondary live broadcast rooms in the target live broadcast group.

Since the main live broadcast interface is displayed in the first area of the target page shown in FIG. 4, the main perspective is the main live broadcast interface. In this main perspective, when the target object joins the target secondary live broadcast room, the secondary live broadcast interfaces corresponding to the plurality of secondary live broadcast rooms displayed in the second area are automatically switched to the secondary live broadcast interfaces corresponding to respective secondary live broadcast rooms in the target live broadcast group, which can attract users to enter any secondary live broadcast interface in the target live broadcast group, and is conducive to improving the display rate and thumb up rate of any secondary live broadcast interface in the target live broadcast group, so as to improve the efficiency of information integration and transmission between live broadcast rooms.

In another optional embodiment, the target page shown in FIG. 7 can also be automatically displayed on the target page shown in FIG. 3. Correspondingly, in the above step S15, in response to the target secondary live broadcast room being in the interactive state with the target object, displaying the secondary live broadcast interfaces corresponding to respective secondary live broadcast rooms of the target live broadcast group in the second area of the target page, includes:
in response to the target secondary live broadcast room being in the interactive state with the target object, automatically displaying the secondary live broadcast interfaces corresponding to respective secondary live broadcast rooms of the target live broadcast group in the second area of the target page.

Specifically, in the case that the target page currently viewed by the user is the target page shown in FIG. 3 (that is, the main live broadcast interface is displayed in the first area, and the preset area control information is in the first state), in response to that the target secondary live broadcast room is in the interactive state with the target object, the secondary live broadcast interfaces corresponding to respective secondary live broadcast rooms of the target live broadcast group are displayed in the second area of the target page.

Since the main live broadcast interface is displayed in the first area of the interface shown in FIG. 3, the main perspective is the main live broadcast interface. In the main perspective, when a target object joins the target secondary live broadcast room, the secondary live broadcast interfaces corresponding to respective secondary live broadcast rooms in the target live broadcast group are automatically displayed the second area of the target page, which can attract users to enter any secondary live broadcast interface in the target live broadcast group, and is beneficial to improve the display rate and thumb up rate of any secondary live broadcast interface in the target live broadcast group, so as to improve the efficiency of information integration and transmission between live broadcast rooms.

In an optional embodiment, in response to the target secondary live broadcast room being in the interactive state with the target object, displaying the secondary live broadcast interfaces corresponding to respective secondary live broadcast rooms of the target live broadcast group in the second area of the target page, may include:
in response to the target secondary live broadcast room being in the interactive state with the target object, displaying the secondary live broadcast interfaces corresponding to respective secondary live broadcast rooms of the target live broadcast group in the form of a list in the second area, in which the target secondary live broadcast interface corresponding to the target secondary live broadcast room is located at the top of the list.

Further, as shown in FIG. 7, by displaying the secondary live broadcast interfaces corresponding to respective secondary live broadcast rooms of the target live broadcast group in the form of a list, and displaying the target secondary live broadcast interface corresponding to the target secondary live broadcast room that the target object has joined at the top of the list, it is beneficial to more intuitively display the secondary live broadcast interfaces corresponding to respective secondary live broadcast rooms in the target live broadcast group and the target secondary live broadcast interface to which the target object joins, which reduces the interactive operations generated during the process of displaying the live broadcast interfaces, improves the speed of displaying the live broadcast interfaces, reduces the consumption of system resources during displaying the live broadcast interfaces, and improves the efficiency of information integration and transmission in the live broadcast rooms.

In an optional embodiment, after in response to the target secondary live broadcast room being in the interactive state with the target object, displaying the secondary live broadcast interfaces corresponding to respective secondary live broadcast rooms of the target live broadcast group in the second area of the target page, the method may further include:
in response to a first selection instruction triggered based on any secondary live broadcast interface in the target live broadcast group, switching the first secondary live broadcast interface corresponding to the first selection instruction from the second area to the first area, and switching the main live broadcast interface from the first area to the second area.

In embodiments of the present disclosure, since the secondary live broadcast interfaces corresponding to respective secondary live broadcast rooms of the target live broadcast group are displayed in the second area, there is no need to exit the main live broadcast interface displayed in the first area when switching pages. In response to the first selection instruction triggered based on the secondary live broadcast interface of any secondary live broadcast room in the target live broadcast group, switching between the secondary live broadcast interface of any secondary live broadcast room and the main live broadcast interface can be performed directly, thus effectively attracting the users watching the main live broadcast room to the secondary live broadcast room, reducing the interactive operations during the switching of the live broadcast interface, improving the speed of the live broadcast interface switching and the efficiency of information integration and transmission in the live broadcast rooms.

FIG. 8 is a schematic diagram 6 of a target page according to an embodiment. FIG. 8 may be obtained by triggering any secondary live broadcast interface in the target live broadcast group in FIG. 7. As shown in FIG. 8, in order to display the live broadcast interfaces more intuitively, reduce the interaction with users, and thus reduce the consumption of system resources during the interface switching process, when switching, the main live broadcast interface can be directly switched from to the first area to the top of the list in the second area.

In an optional embodiment, after in response to the first selection instruction triggered based on any secondary live broadcast interface in the target live broadcast group, switching the first secondary live broadcast interface corresponding to the first selection instruction from the second area to the first area, and switching the main live broadcast interface from the first area to the second area, the method may further include:
in response to a hiding instruction triggered based on the preset area control information in the second state, hiding the second area, and adjusting the state of the preset area control information from the second state to the first state.

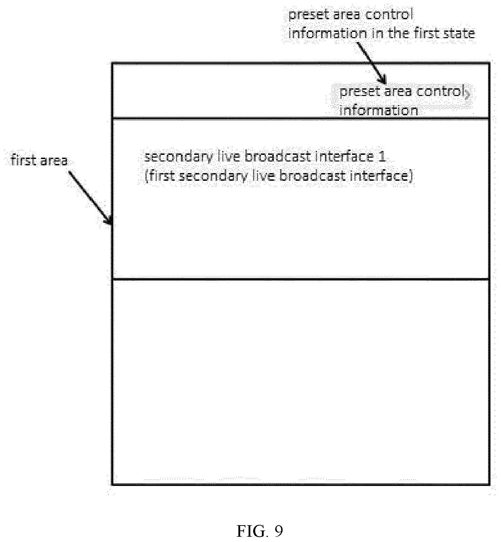

FIG. 9 is a schematic diagram 7 of a target page according to an embodiment. FIG. 9 may be obtained by the user clicking the preset area control information in the second state in FIG. 8. As shown in FIG. 9, when the user clicks the preset area control information in the second state in FIG. 8, the hiding instruction is triggered to hide the second area, and at this time, the first secondary live broadcast interface is displayed in the first area.

It should be noted that, after hiding the second area, the state of the preset area control information in FIG. 9 is adjusted from the second state to the first state.

In embodiments of the present disclosure, by clicking the hiding instruction triggered by the preset area control information in the second state, the second area is hidden, so that the first secondary live broadcast interface can be presented to the user through a larger viewing angle range, and the user experience can be improved.

In an optional embodiment, the method may further include:
in response to the selection instruction triggered based on the main live broadcast interface in the second area, switching the main live broadcast interface from the second area to the first area, and hiding the second area.

Further, as shown in FIG. 8, when the user clicks on the main live broadcast interface in FIG. 8, the selection instruction is triggered, and in response to the selection instruction, the client displays the main live broadcast interface in the first area, and hides the second area, that is, returns to the target page shown in FIG. 3.

In embodiments of the present disclosure, by clicking on the main live broadcast interface located in the second area, it is possible to directly switch back to the target page shown in FIG. 3 without exiting the currently displayed live broadcast interface, which improves the convenience of switching between live broadcast rooms and reduces the interactive operations generated during the process of displaying live broadcast interfaces, thereby improving the efficiency of information integration and transmission between live broadcast rooms and reducing the consumption of system resources during the display process of the live broadcast interfaces.

In an optional embodiment, in a case that the first secondary live broadcast interface is the target secondary live broadcast interface, the method may further include:
in response to the first selection instruction, hiding the interaction start prompt information.

Further, as shown in FIG. 7, if the first secondary live broadcast interface is the target secondary live broadcast interface corresponding to the target secondary live broadcast room to which the target object joins, then after switching to FIG. 8, the interaction start prompt information may be hidden. If the first secondary live broadcast interface is not the target secondary live broadcast interface, then after switching to FIG. 8, the interaction start prompt information is kept displaying in the preset area where the first secondary live broadcast interface is located, improving interaction friendliness between users.

In an optional embodiment, after in response to that the target secondary live broadcast room is in the interactive state with the target object, displaying the secondary live broadcast interfaces corresponding to respective secondary live broadcast rooms of the target live broadcast group in the second area of the target page, the method may further include:
in response to not receiving the first selection instruction within a preset time period after the secondary live broadcast interfaces corresponding to respective secondary live broadcast rooms in the target live broadcast group is displayed, hiding the second area and the interaction start prompt information.

Further, as shown in FIG. 7, if in the target page as shown in FIG. 7, no selection instruction triggered based on the secondary live broadcast interface of any secondary live broadcast room in the target live broadcast group is received within a preset time period (for example, 30 seconds) after the secondary live broadcast interfaces corresponding to respective secondary live broadcast rooms in the target live broadcast room are displayed, the second area and the interaction start prompt information are hidden, and the target page shown in FIG. 3 is automatically returned to.

In embodiments of the present disclosure, if within a preset time period after the secondary live broadcast interfaces corresponding to respective secondary live broadcast rooms in the target live broadcast group are displayed, the selection instruction triggered based on the secondary live broadcast interface of any secondary live broadcast room in the target live broadcast group is not received, it means that the user is not very interested in the content in the secondary live broadcast rooms at this time. If the second area is continuously displayed, the display of the second area will not only affect the display effect of the main live broadcast interface in the first area, but will also increase the consumption of system resources. Therefore, when the selection instruction triggered based on the secondary live broadcast interface corresponding to any secondary live broadcast room in the target live broadcast group is not received, the second area and the interaction start prompt information are hidden, which can reduce the consumption of system resources and improve the display effect of the main live broadcast interface in the first area.

It should be noted that, in order to improve the user experience, in practical applications, for the case where a target object joins the target secondary live broadcast room, if the user is currently watching the secondary live broadcast interface corresponding to any secondary live broadcast room in the plurality of secondary live broadcast rooms, the secondary live broadcast interfaces corresponding to respective secondary live broadcast rooms in the target live broadcast group will not be automatically displayed in the second area even if the target object joins the target secondary live broadcast room.

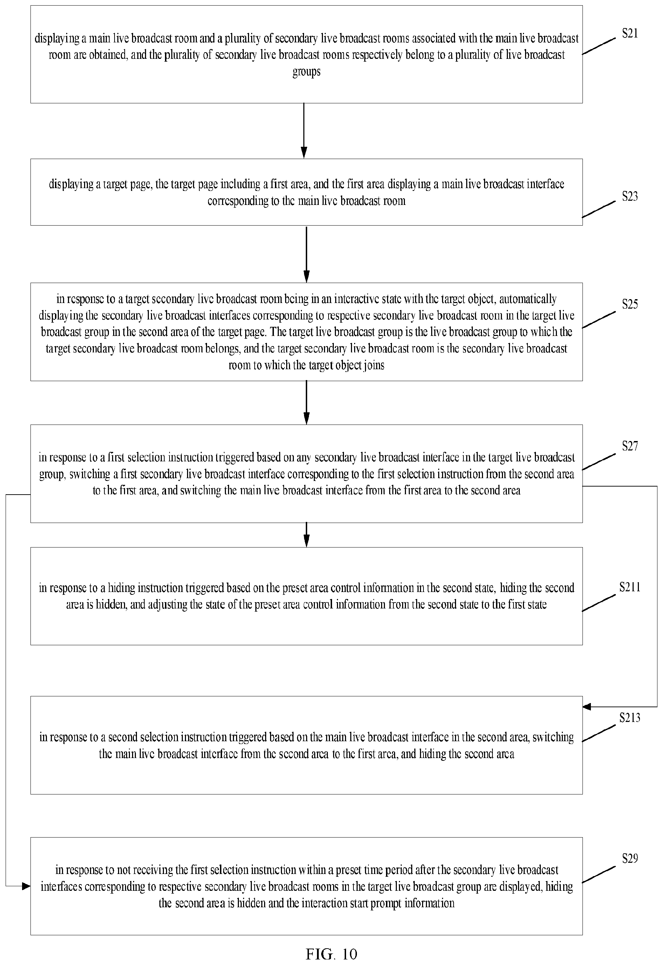

FIG. 10 is a flowchart 2 of a method for displaying a live broadcast interface according to an embodiment. As shown in FIG. 10, when a target object joins the secondary live broadcast room corresponding to any secondary live broadcast interface, the following steps S21-S213 may be included.

In step S21, a main live broadcast room and a plurality of secondary live broadcast rooms associated with the main live broadcast room are obtained. The plurality of secondary live broadcast rooms belong to a plurality of live broadcast groups respectively.

In step S23, a target page is displayed, the target page including a first area, and the first area displaying a main live broadcast interface corresponding to the main live broadcast room.

In step S25, in response to a target secondary live broadcast room being in an interactive state with a target object, secondary live broadcast interfaces corresponding to respective secondary live broadcast rooms of a target live broadcast group are automatically displayed in a second area of the target page. The target live broadcast group is the live broadcast group to which the secondary live broadcast room belongs, and the target secondary live broadcast room is the secondary live broadcast room to which the target object joins.

In step S27, in response to a first selection instruction triggered based on any secondary live broadcast interface in the target live broadcast group, a first secondary live broadcast interface corresponding to the first selection instruction is switched from the second area to the first area, and the main live broadcast interface is switched from the first area to the second area.

In step S29, in response to not receiving the first selection instruction within a preset time period after the secondary live broadcast interfaces corresponding to respective secondary live broadcast rooms in the target live broadcast group are displayed, the second area is hidden and the interaction start prompt information is hidden.

In step S211, in response to a hiding instruction triggered based on the preset area control information in the second state, the second area is hidden, and the state of the preset area control information is adjusted from the second state to the first state.

In step S213, in response to a second selection instruction triggered based on the main live broadcast interface in the second area, the main live broadcast interface is switched from the second area to the first area, and the second area is hidden.

Specifically, the process from the above step S21 to the above step S213 corresponds to FIG. 3, FIG. 7, FIG. 8, and FIG. 9, and will not be repeated here.

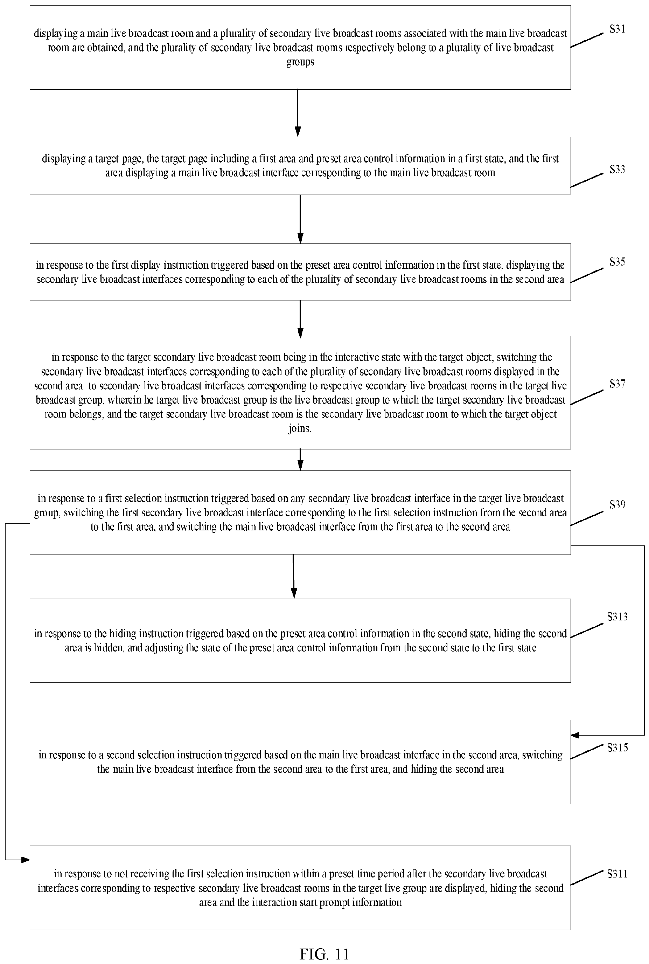

FIG. 11 is a flowchart 3 of a method for displaying a live broadcast interface according to an embodiment. As shown in FIG. 11, when a target object joins the secondary live broadcast room corresponding to any secondary live broadcast interface, the following steps S31-S315 may be included.

In step S31, a main live broadcast room and a plurality of secondary live broadcast rooms associated with the main live broadcast room are obtained. The plurality of secondary live broadcast rooms respectively belong to a plurality of live broadcast groups.

In step S33, a target page is displayed, the target page including a first area and preset area control information in a first state, and the first area displaying a main live broadcast interface corresponding to the main live broadcast room.

In step S35, in response to the first display instruction triggered based on the preset area control information in the first state, the secondary live broadcast interfaces corresponding to each of the plurality of secondary live broadcast rooms are displayed in the second area.

In step S37, in response to the target secondary live broadcast room being in the interactive state with the target object, the secondary live broadcast interfaces corresponding to each of the plurality of secondary live broadcast rooms displayed in the second area are switched to secondary live broadcast interfaces corresponding to respective secondary live broadcast rooms in the target live broadcast group. The target live broadcast group is the live broadcast group to which the target secondary live broadcast room belongs, and the target secondary live broadcast room is the secondary live broadcast room to which the target object joins.

In step S39, in response to a first selection instruction triggered based on any secondary live broadcast interface in the target live broadcast group, the first secondary live broadcast interface corresponding to the first selection instruction is switched from the second area to the first area, and the main live broadcast interface is switched from the first area to the second area.

In step S311, in response to not receiving the first selection instruction within a preset time period after the secondary live broadcast interfaces corresponding to respective secondary live broadcast rooms in the target live group are displayed, the second area is hidden and the interaction start prompt information is hidden.

In step S313, in response to the hiding instruction triggered based on the preset area control information in the second state, the second area is hidden, and the state of the preset area control information is adjusted from the second state to the first state.

In step S315, in response to a second selection instruction triggered based on the main live broadcast interface in the second area, the main live broadcast interface is switched from the second area to the first area, and the second area is hidden.

Specifically, the processes from the above step S31 to the above step S315 correspond to FIG. 3, FIG. 4, FIG. 7, FIG. 8, and FIG. 9, and details are not repeated here.

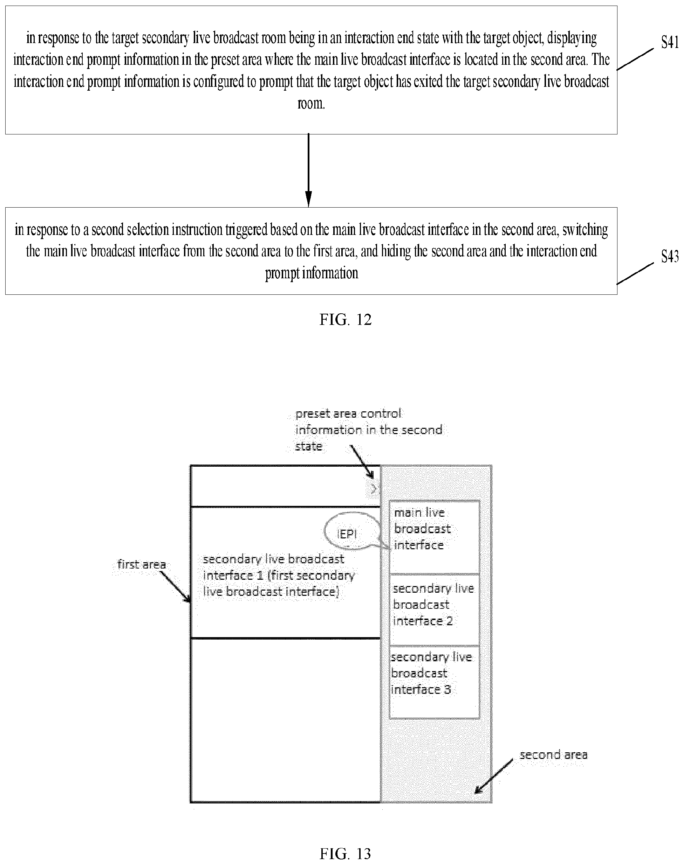

In an optional embodiment, FIG. 12 is a flowchart showing a live interface display in the case of ending the interaction with the target object according to an embodiment. As shown in FIG. 12, after in response to the first selection instruction triggered based on any secondary live broadcast interface in the target live broadcast group, switching the first secondary live broadcast interface corresponding to the first selection instruction from the second area to the first area, and switching the main live broadcast interface from the first area to the second area, the method may further include following steps S41 and S43.

In step S41, in response to the target secondary live broadcast room being in an interaction end state with the target object, interaction end prompt information is displayed in the preset area where the main live broadcast interface is located in the second area. The interaction end prompt information is configured to prompt that the target object has exited the target secondary live broadcast room.

In step S43, in response to a second selection instruction triggered based on the main live broadcast interface in the second area, the main live broadcast interface is switched from the second area to the first area, and the second area and the interaction end prompt information are hidden.

For example, the target secondary live broadcast room in the interaction end state with the target object can be set by the user in the target secondary live broadcast room when the target object exits the target secondary live broadcast room, for example, set by the anchor of the target secondary live broadcast room.

For example, the target secondary live broadcast room in the interaction end sate with the target object can also be preset. For example, if it is known that the target object will join the target secondary live broadcast room within a certain time period, the interaction duration can be preset, and when the preset interaction duration is reached, the target secondary live broadcast room is automatically set to be in the interaction end state with the target object.

FIG. 13 is a schematic diagram 8 of a target page according to an embodiment. FIG. 13 may be obtained on the basis of FIG. 8. When the user is viewing the target page shown in FIG. 8 (that is, the first secondary live broadcast interface is displayed in the first area, the main live broadcast interface and other live broadcast interfaces are displayed in the second area, and the other live broadcast interfaces include the secondary live broadcast interfaces in the secondary live broadcast interfaces corresponding to respective secondary live broadcast rooms in the target live broadcast group, other the first secondary live broadcast interface), if the target object exits the target secondary live broadcast room, the target secondary live broadcast room sends the target secondary live broadcast room in the interaction end state with the target object to the server, the server forwards the target secondary live broadcast room in the interaction end state with the target object to the client, and in response to that the target secondary live broadcast room is in the interaction end state with the target object, the client displays the interaction end prompt information (IEPI) in the preset area where the main live broadcast interface is located, so as to obtain the target page as shown in FIG. 13. Then, in response to a second selection instruction triggered based on the main live broadcast interface, the main live broadcast interface can be switched from the second area to the first area, and the second area and the interaction end prompt information can be hidden, that is, the target page shown in FIG. 3 can be returned to.

For example, the interaction end prompt information may be displayed in the preset area in the form of prompt bubbles, and may also be displayed in other forms, which is not limited in the present disclosure.

For example, the interaction end prompt information may be: the interaction with the target object has ended, click to switch back to the main live broadcast room, etc.

In embodiments of the present disclosure, displaying the interaction end prompt information in the preset area where the main live broadcast interface is located can more intuitively display the interaction result to the user, which is convenient for responding to instruction triggered by the user according to the interaction end prompt information, reducing the interaction with users and consumption of system resources. In addition, in response to the selection instruction triggered based on the main live broadcast interface, the current target page can be immediately switched to the target page shown in FIG. 3. During the switching process, there is no need to exit the current interface before switching, which improves the switching speed of the live broadcast interface.

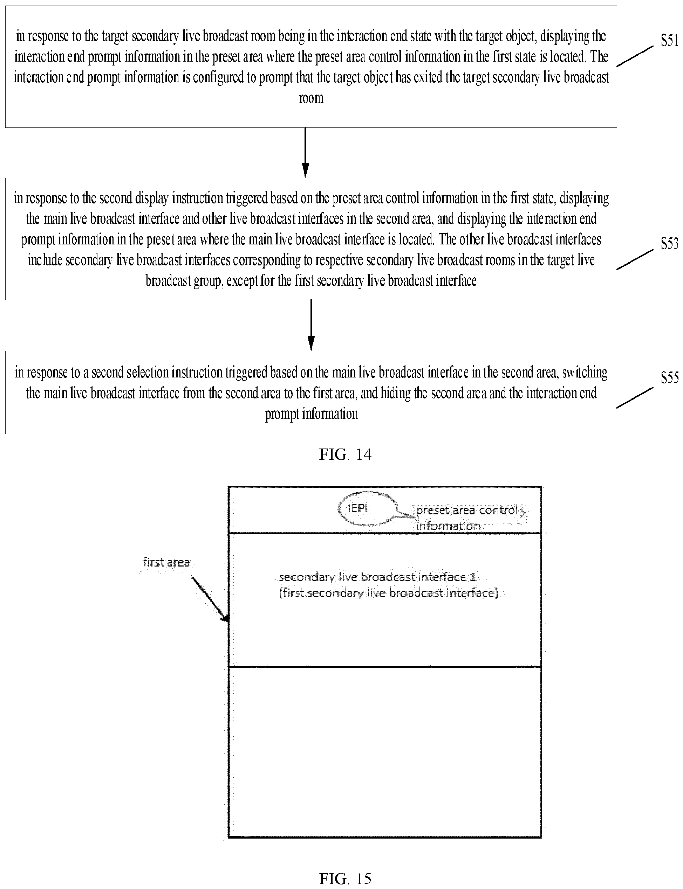

In an optional embodiment, FIG. 14 is a flow chart showing another live interface display in the case of ending the interaction with the target object according to an embodiment. As shown in FIG. 14, after in response to the hiding instruction triggered based on the preset area control information in the second state, hiding the second area, and adjusting the state of the preset area control information from the second state to the first state, the method may further include following steps S51-S55.

In step S51, in response to the target secondary live broadcast room being in the interaction end state with the target object, the interaction end prompt information is displayed in the preset area where the preset area control information in the first state is located. The interaction end prompt information is configured to prompt that the target object has exited the target secondary live broadcast room.

In step S53, in response to the second display instruction triggered based on the preset area control information in the first state, the main live broadcast interface and other live broadcast interfaces are displayed in the second area, and the interaction end prompt information is displayed in the preset area where the main live broadcast interface is located. The other live broadcast interfaces include secondary live broadcast interfaces corresponding to respective secondary live broadcast rooms in the target live broadcast group, except for the first secondary live broadcast interface.

In step S55, in response to a second selection instruction triggered based on the main live broadcast interface in the second area, the main live broadcast interface is switched from the second area to the first area, and the second area and the interaction end prompt information are hidden.

FIG. 15 is a schematic diagram 9 of a target page according to an embodiment. FIG. 15 may be obtained on the basis of FIG. 9. When the target page currently viewed by the user is the target page shown in FIG. 9 (that is, the first secondary live broadcast interface is displayed in the first area, and the preset area control information is in the first state), in response to the target secondary live broadcast room being in the interaction end state with the target object, the interaction end prompt information can be displayed in the preset area where the preset area control information is located, so as to obtain the target page as shown in FIG. 15. At this time, the state of the preset area control information is determined from the second state to the first state. Then the user clicks the preset area control information in the first state, thereby triggering the second display instruction, displaying the main live broadcast interface and other live broadcast interfaces in the second area, and displaying the interaction end prompt information in the preset area where the main live broadcast interface is located, that is, returning to the target page shown in FIG. 13. Finally, in response to the second selection instruction triggered based on the main live broadcast interface, the main live broadcast interface is switched from the second area to the first area, and the second area and the interaction end prompt information are hidden, that is, the target page shown in FIG. 3 is returned to.

For example, the interaction end prompt information may be displayed in the preset area in the form of prompt bubbles, and may also be displayed in other forms, which is not limited in the present disclosure.

For example, the interaction end prompt information may be: the interaction with the target object has ended, click to switch back to the main live broadcast room, etc.

In embodiments of the present disclosure, when the user is watching the first secondary live broadcast interface (for example, the target secondary live broadcast interface), if the target object exits the target secondary live broadcast room, the interaction end prompt information may be displayed near the preset area control information first, to remind the user that the current interaction has ended, and in response to the second display instruction triggered by the user according to the interaction end prompt information, the main live broadcast interface and other live broadcast interfaces are displayed in the second area, and the interaction end prompt information is displayed in the range of the preset area where the main live broadcast interface is located, reducing the interactive operations and the consumption of system resources generated during the process of displaying the live broadcast interfaces. In addition, in response to the selection instruction triggered based on the main live broadcast interface, the current target page can be switched to the target page shown in FIG. 3 immediately, thereby improving the switching speed of the live broadcast interface.

It should be noted that, if the user is currently watching any secondary live broadcast interface displayed in the first area, and the target object exits the target secondary live broadcast room, the second area is not automatically displayed. If the user is currently watching the main interface displayed in the first area, and the target object exits the target secondary live broadcast room, the second area is not automatically displayed.

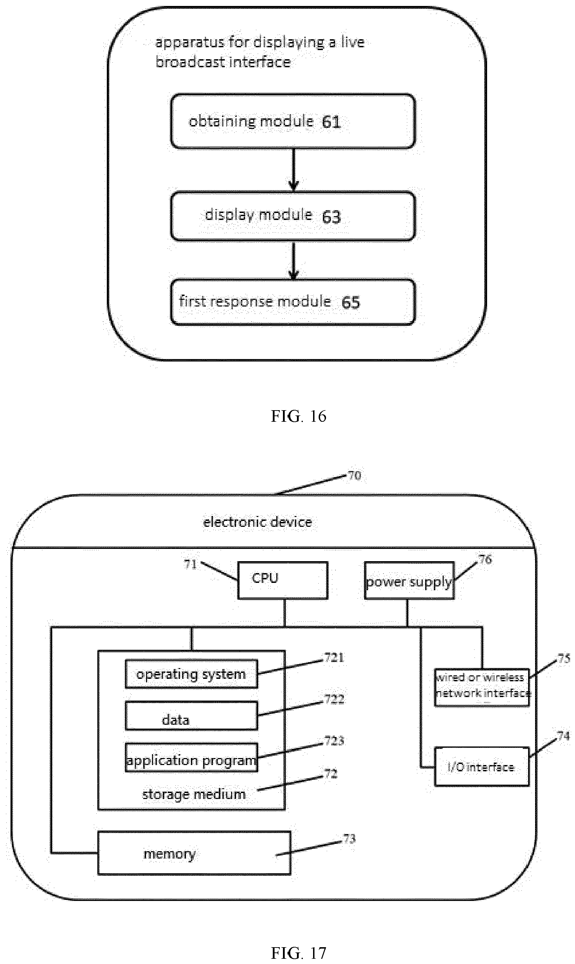

FIG. 16 is a block diagram of an apparatus for displaying a live interface according to an embodiment. Referring to FIG. 16, the apparatus may include an obtaining module 61, a display module 63 and a first response module 65.

The obtaining module is configured to obtain a main live broadcast room and a plurality of secondary live broadcast rooms associated with the main live broadcast room, wherein the plurality of secondary live broadcast rooms belong to a plurality of live broadcast groups respectively.

The display module is configured to display a target page, wherein the target page includes a first area, and the first area displays a main live broadcast interface corresponding to the main live broadcast room.

The first response module is configured to, in response to a target secondary live broadcast room being in an interactive state with a target object, display secondary live broadcast interfaces corresponding to each secondary live broadcast room of a target live broadcast group in a second area of the target page, wherein the target live broadcast group is a live broadcast group to which the target secondary live broadcast room belongs, and the target secondary live broadcast room is a secondary live broadcast room that the target object joins.

In an embodiment, the target page includes preset area control information in a first state, the preset area control information in the first state is configured to control display in the second area, and the apparatus further includes:
a first display module, configured to, in response to a first display instruction triggered based on the preset area control information in the first state, display the secondary live broadcast interfaces corresponding to each of the plurality of secondary live broadcast rooms in the second area.

Correspondingly, the first response module is configured to, in response to the target secondary live broadcast room being in the interactive state with the target object, switch the secondary live broadcast interfaces corresponding to each of the plurality of secondary live broadcast rooms displayed in the second area to the secondary live broadcast interfaces corresponding to respective secondary live broadcast rooms in the target live broadcast group.

In an embodiment, the apparatus further includes:
a second response module, configured to, in response to the target secondary live broadcast room being in the interactive state with the target object, display interaction start prompt information in a preset area where the target secondary live broadcast interface corresponding to the target secondary live broadcast room is located, and adjust a state of the preset area control information from the first state to a second state, wherein the interaction start prompt information is configured to prompt that the target object has joined the target secondary live broadcast room, and the preset area control information in the second state is configured to control hiding the second area.

In an embodiment, the apparatus further includes:
a first switch module, configured to, in response to a first selection instruction triggered based on any secondary live broadcast interface in the target live broadcast group, switch a first secondary live broadcast interface corresponding to the first selection instruction from the second area to the first area, and switch the main live broadcast interface from the first area to the second area.

In an embodiment, the apparatus further includes:
a second display module, configured to, in response to the target secondary live broadcast room being in an interaction end state with the target object, display interaction end prompt information in the preset area where the main live broadcast interface is located in the second area, wherein the interaction end prompt information is configured to prompt that the target object has exited the target secondary live broadcast room.

In an embodiment, the apparatus further includes:
a third response module, configured to, in response to a hiding instruction triggered based on the preset area control information in the second state, hide the second area, and adjust a state of the preset area control information from the second state to the first state.

In an embodiment, the apparatus further includes:
a third display module, configured to, in response to the target secondary live broadcast room being in an interaction end state with the target object, display interaction end prompt information in the preset area where the preset area control information in the first state is located, wherein the interaction end prompt information is configured to prompt that the target object has exited the target secondary live broadcast room;
a fourth display module, configured to, in response to a second display instruction triggered based on the preset area control information in the first state, display the main live broadcast interface and other live broadcast interfaces in the second area, and display the interaction end prompt information in a preset area where the main live broadcast room is located, wherein the other live broadcast interfaces comprise the secondary live broadcast interfaces corresponding to each secondary live broadcast room in the target live broadcast group other than the first secondary live broadcast interface.

In an embodiment, the apparatus further includes:
a fourth response module, configured to, in response to a second selection instruction triggered based on the main live broadcast interface in the second area, switch the main live broadcast interface from the second area to the first area, and hide the second area and the interaction end prompt information.

In an embodiment, in a case that the first secondary live broadcast interface is the target secondary live broadcast interface, the apparatus further includes:
a first hiding module, configured to, in response to the first selection instruction, hide the interaction start prompt information.

In an embodiment, the apparatus further includes:
a second hiding module, configured to, in response to not receiving the first selection instruction within a preset time period after displaying the secondary live broadcast interfaces corresponding to respective secondary live broadcast rooms in the target live broadcast group, hide the second area and the interaction start prompt information.

Regarding the apparatus in the above embodiments, the specific manner in which each module performs operations has been described in detail in the embodiments of the method, and will not be described in detail here.

In an embodiment, an electronic device is also provided, including a processor and a memory configured to store instructions executable by the processor. The processor is configured to execute the instructions stored in the memory, so that steps of the method for displaying a live broadcast interface in any embodiment are implemented.

The electronic device may be a terminal, a server, or a similar computing device. Taking the electronic device as a server as an example, FIG. 17 is a block diagram of an electronic device for displaying a live interface according to an embodiment. The electronic device 70 may vary greatly due to different configurations or performances, and may include one or more central processing units (CPU) 71 (the CPU 71 may include, but is not limited to, a microprocessor MCU or a programmable logic device FPGA, etc.), memory 73 for storing data, one or more storage media 72 (e.g., one or more mass storage devices) storing application programs 723 or data 722. The memory 73 and the storage medium 72 may be temporary storage or persistent storage. The program stored in the storage medium 72 may include one or more modules, and each module may include a series of instructions to operate on the electronic device. Furthermore, the central processing unit 71 may be configured to communicate with the storage medium 72 to execute a series of instruction operations in the storage medium 72 on the electronic device 70. The electronic device 70 may also include one or more power supplies 76, one or more wired or wireless network interfaces 75, one or more input/output interfaces 74, and/or, one or more operating systems 721, such as Windows Server^{™}, Mac OS XTM, UnixTM, LinuxTM, FreeBSDTM and the like.

The input/output interface 74 may be used to receive or transmit data via a network. The specific example of the network may include a wireless network provided by the communication provider of the electronic device 70. In one example, the input/output interface 74 includes a network interface adapter (NIC), which can be connected to other network devices through the base station so as to communicate with the Internet. In an exemplary embodiment, the input/output interface 74 may be a radio frequency (RF) module, which is used for wirelessly communicating with the Internet.

Those of ordinary skill in the art can understand that the structure shown in FIG. 17 is only illustrative, which does not limit the structure of the electronic device. For example, the electronic device 70 may also include more or fewer components than shown in FIG. 17, or have a different configuration than that shown in FIG. 17.

In an embodiment, a computer-readable storage medium is also provided. When the instructions in the computer-readable storage medium are executed by the processor of the electronic device, the electronic device can perform steps of the method for displaying a live broadcast interface in any embodiment.

In an embodiment, a computer program product is also provided, including a computer program. When the computer program is executed by a processor, the method for displaying a live broadcast interface provided in any one of the foregoing embodiments is implemented.

Those of ordinary skill in the art can understand that all or part of the processes in the methods of the above embodiments can be implemented by instructing relevant hardware through a computer program, and the computer program can be stored in a non-volatile computer-readable storage medium. When the computer program is executed, it may include the processes of the above-mentioned method embodiments. Any reference to a memory, storage, database or other medium used in the various embodiments provided in this disclosure may include non-volatile and/or volatile memory. Nonvolatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous chain Road (Synchlink) DRAM (SLDRAM), memory bus (Rambus) direct RAM (RDRAM), direct memory bus dynamic RAM (DRDRAM), and memory bus dynamic RAM (RDRAM) and so on.

Other embodiments of the present disclosure will readily occur to those skilled in the art upon consideration of the specification and practice of the description disclosed herein. This application is intended to cover any variations, uses, or adaptations of the present disclosure that follow the general principles of the present disclosure and include common knowledge or techniques in the technical field not disclosed by the present disclosure. The specification and examples are to be regarded as exemplary only, with the true scope and spirit of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A method for displaying a live broadcast interface, comprising:
obtaining a main live broadcast room and a plurality of secondary live broadcast rooms associated with the main live broadcast room, wherein the plurality of secondary live broadcast rooms belong to a plurality of live broadcast groups respectively (S11; S21; S31);
displaying a target page, wherein the target page comprises a first area, and the first area displays a main live broadcast interface corresponding to the main live broadcast room (S13; S23; S33);
in response to a target secondary live broadcast room being in an interactive state with a target object, displaying secondary live broadcast interfaces corresponding to respective secondary live broadcast rooms of a target live broadcast group in a second area of the target page, wherein the target live broadcast group is a live broadcast group to which the target secondary live broadcast room belongs, and the target secondary live broadcast room is a secondary live broadcast room that the target object joins (S15; S25).

2. The method of claim 1, wherein the target page comprises preset area control information in a first state, the preset area control information in the first state is configured to control display in the second area, the method further comprises:
in response to a first display instruction triggered based on the preset area control information in the first state, displaying the secondary live broadcast interfaces corresponding to the plurality of secondary live broadcast rooms in the second area (S35);
correspondingly, in response to the target secondary live broadcast room being in the interactive state with the target object, displaying the secondary live broadcast interfaces corresponding to respective secondary live broadcast rooms of the target live broadcast group in the second area of the target page (S15; S25), comprises:
in response to the target secondary live broadcast room being in the interactive state with the target object, switching the secondary live broadcast interfaces corresponding to the plurality of secondary live broadcast rooms displayed in the second area to the secondary live broadcast interfaces corresponding to respective secondary live broadcast rooms in the target live broadcast group (S37).

3. The method of claim 2, further comprising:
in response to the target secondary live broadcast room being in the interactive state with the target object, displaying interaction start prompt information in a preset area where the target secondary live broadcast interface corresponding to the target secondary live broadcast room is located, and adjusting a state of the preset area control information from the first state to a second state, wherein the interaction start prompt information is configured to prompt that the target object has joined the target secondary live broadcast room, and the preset area control information in the second state is configured to control hiding of the second area.

4. The method of claim 3, wherein the method further comprises:
in response to a first selection instruction triggered based on any secondary live broadcast interface in the target live broadcast group, switching a first secondary live broadcast interface corresponding to the first selection instruction from the second area to the first area, and switching the main live broadcast interface from the first area to the second area (S27).

5. The method of claim 4, wherein after in response to the first selection instruction triggered based on any secondary live broadcast interface in the target live broadcast group, switching the first secondary live broadcast interface corresponding to the first selection instruction from the second area to the first area, and switching the main live broadcast interface from the first area to the second area (S27), the method further comprises:
in response to the target secondary live broadcast room being in an interaction end state with the target object, displaying interaction end prompt information in the preset area where the main live broadcast interface is located in the second area, wherein the interaction end prompt information is configured to prompt that the target object has exited the target secondary live broadcast room (S41).

6. The method of claim 4, wherein the method further comprises:
in response to a hiding instruction triggered based on the preset area control information in the second state, hiding the second area, and adjusting a state of the preset area control information from the second state to the first state (S211; S313).

7. The method of claim 6, wherein after in response to the hiding instruction triggered based on the preset area control information in the second state, hiding the second area, and adjusting the state of the preset area control information from the second state to the first state (S211; S313), the method further comprises:
in response to the target secondary live broadcast room being in an interaction end state with the target object, displaying interaction end prompt information in the preset area where the preset area control information in the first state is located, wherein the interaction end prompt information is configured to prompt that the target object has exited the target secondary live broadcast room (S51);
in response to a second display instruction triggered based on the preset area control information in the first state, displaying the main live broadcast interface and other live broadcast interfaces in the second area, and displaying the interaction end prompt information in a preset area where the main live broadcast room is located, wherein the other live broadcast interfaces comprise the secondary live broadcast interfaces corresponding to respective secondary live broadcast rooms in the target live broadcast group other than the first secondary live broadcast interface (S53).

8. The method of claim 5 or 7, further comprising:
in response to a second selection instruction triggered based on the main live broadcast interface in the second area, switching the main live broadcast interface from the second area to the first area, and hiding the second area and the interaction end prompt information (S43; S55).

9. The method of claim 5 or 7, wherein in a case that the first secondary live broadcast interface is the target secondary live broadcast interface, the method further comprises:
in response to the first selection instruction, hiding the interaction start prompt information.

10. The method of claim 5 or 7, wherein, the method further comprises:
in response to not receiving the first selection instruction within a preset time period after displaying the secondary live broadcast interfaces corresponding to respective secondary live broadcast rooms in the target live broadcast group, hiding the second area and the interaction start prompt information (S29; S311).

11. An apparatus for displaying a live broadcast interface, comprising:
an obtaining module (61), configured to obtain a main live broadcast room and a plurality of secondary live broadcast rooms associated with the main live broadcast room, wherein the plurality of secondary live broadcast rooms belong to a plurality of live broadcast groups respectively;
a display module (63), configured to display a target page, wherein the target page comprises a first area, and the first area displays a main live broadcast interface corresponding to the main live broadcast room;
a first response module (65), configured to, in response to a target secondary live broadcast room being in an interactive state with a target object, display secondary live broadcast interfaces corresponding to respective secondary live broadcast rooms of a target live broadcast group in a second area of the target page, wherein the target live broadcast group is a live broadcast group to which the target secondary live broadcast room belongs, and the target secondary live broadcast room is a secondary live broadcast room that the target object joins.

12. The apparatus of claim 11, wherein the target page comprises preset area control information in a first state, the preset area control information in the first state is configured to control display in the second area, and the apparatus further comprises:
a first display module, configured to, in response to a first display instruction triggered based on the preset area control information in the first state, display the secondary live broadcast interfaces corresponding to the plurality of secondary live broadcast rooms in the second area;
correspondingly, the first response module is configured to, in response to the target secondary live broadcast room being in the interactive state with the target object, switch the secondary live broadcast interfaces corresponding to the plurality of secondary live broadcast rooms displayed in the second area to the secondary live broadcast interfaces corresponding to respective secondary live broadcast rooms in the target live broadcast group;

13. The apparatus of claim 12, further comprising:
a second response module, configured to, in response to the target secondary live broadcast room being in the interactive state with the target object, display interaction start prompt information in a preset area where the target secondary live broadcast interface corresponding to the target secondary live broadcast room is located, and adjust a state of the preset area control information from the first state to a second state, wherein the interaction start prompt information is configured to prompt that the target object has joined the target secondary live broadcast room, and the preset area control information in the second state is configured to control hiding the second area;

14. The apparatus of claim 13, further comprising:
a first switch module, configured to, in response to a first selection instruction triggered based on any secondary live broadcast interface in the target live broadcast group, switch a first secondary live broadcast interface corresponding to the first selection instruction from the second area to the first area, and switch the main live broadcast interface from the first area to the second area,

15. The apparatus of claim 14, further comprising:
a second display module, configured to, in response to the target secondary live broadcast room being in an interaction end state with the target object, display interaction end prompt information in the preset area where the main live broadcast interface is located in the second area, wherein the interaction end prompt information is configured to prompt that the target object has exited the target secondary live broadcast room.
